# EUROPEAN PATENT SPECIFICATION

(11) **EP 4 043 315 B1**
(45) Date of publication and mention of the grant of the patent: **02.04.2025**
(21) Application number: 21851478.4
(22) Date of filing: 23.02.2021
(51) Int. Cl.: B61F 7/00, B60B 35/10, B60B 17/00

(54) **THRUST CONVERSION MECHANISM FOR GAUGE-VARIABLE WHEEL SET, UNLOCKING DEVICE, AND GAUGE-VARIABLE WHEEL SET**
SCHUBUMSETZUNGSMECHANISMUS FÜR RADSATZ MIT VERÄNDERLICHER SPURWEITE, ENTRIEGELUNGSVORRICHTUNG UND RADSATZ MIT VERÄNDERLICHER SPURWEITE
MÉCANISME DE CONVERSION DE POUSSÉE POUR ESSIEU MONTÉ À JAUGE VARIABLE, DISPOSITIF DE DÉVERROUILLAGE ET ESSIEU MONTÉ À JAUGE VARIABLE

(30) Priority: 28.07.2020 CN 202010736296
(43) Date of publication of application: 17.08.2022
(73) Proprietor: CRRC Qingdao Sifang Co., Ltd., Qingdao, Shandong 266111 (CN)
(72) Inventor: WANG, Haitao, Qingdao, Shandong 266111 (CN); WANG, Xu, Qingdao, Shandong 266111 (CN); QIAO, Qingfeng, Qingdao, Shandong 266111 (CN); YIN, Hao, Qingdao, Shandong 266111 (CN); HU, Haitao, Qingdao, Shandong 266111 (CN)
(74) Representative: Micheli & Cie SA
(86) International application number: PCT/CN2021/077343
(87) International publication number: WO 2022/021864

(56) References cited:
- WO-A1-2020/077689
- CN-A- 107 521 519
- CN-A- 108 909 360
- CN-A- 111 071 280
- CN-A- 111 806 497
- CN-U- 202 358 119
- FR-A1- 2 034 882
- US-A1- 2018 118 234

## Description

### CROSS-REFERENCE TO RELATED APPLICATION

The present application claims priority to Chinese application No. 202010736296.9 filed on July 28, 2020, entitled "Thrust Conversion Mechanism for Gauge-Variable Wheelset, Unlocking Device, And Gauge-Variable Wheelset".

### FIELD OF TECHNOLOGY

The present application relates to the technical field of railway vehicle gauge changing, and in particular, to a thrust converting mechanism and an unlocking device for a gauge-changing wheelset and a gauge-changing wheelset.

### BACKGROUND

Transnational passenger and cargo transportation has grown rapidly in recent years. However, different rail gauges of various countries have seriously hindered the transnational rail transportation. In order to solve the problem that the different rail gauges of various countries seriously hinder the transnational railway transportation, a gauge-changing train is proposed, when the train runs on the railway of another country, a distance between wheels on an axle is changeable so as to adapt to the gauge of other countries' railways.

However, traditional gauge-changing wheelset has complex gauge-changing mechanism, cumbersome gauge-changing operations, and low reliability.

WO2020077689A1 discloses a bogie, comprising a framework (1); an axle box (2); an axle (31); a wheel (32) provided on the axle (31) and movable in the axial direction, the wheel (32) being provided with at least two sets of locking slots (321) sequentially arranged in the axial direction; a positioning plate (41) provided on the axle (31) to rotate synchronously with the axle (31); a clamp comprising two symmetrically arranged jaws (43), wherein the jaws (43) are connected to the positioning plate (41) by means of pin shafts (44); a release plate (42) provided on the positioning plate (41) to rotate synchronously with the positioning plate (41), wherein the release plate (42) moves in a first direction to apply force to the jaws (43) so that the jaws (43) rotate to disengage from the locking slots (321), and the release plate (42) moves in a second direction to apply force to the jaws (43) so that the jaws (43) rotate to insert in the locking slots (321); and an unlocking device (5) provided on the axle box (2) or the framework (1) and used for applying axial thrust to the release plate (42) so as to enable the release plate (42) to move in the first direction. Also provided is a rail vehicle using the bogie. The bogie and the rail vehicle can reduce the requirements on ground gauge-changeable devices.

### SUMMARY

The present application is intended to address at least one of technical problems in the prior art. Therefore, the present application provides a thrust converting mechanism for a gauge-changing wheelset having simple gauge-changing operation and high gauge-changing reliability.

The present application further provides an unlocking device for a gauge-changing wheelset.

The present application further provides a gauge-changing wheelset.

According to an embodiment of a first aspect of the present application, provided is a thrust converting mechanism for a gauge-changing wheelset, including a mounting base provided with a horizontal through hole along a horizontal direction; and
a jacking shaft, movably disposed in the horizontal through hole in a penetrating manner, an open hole being provided in one of the jacking shaft and the mounting base at an engagement position between the jacking shaft and the mounting base, the open hole having an axis perpendicular to an axis of the horizontal through hole, a positioning piece being mounted in the open hole and connected with the open hole by an elastic preloaded piece; the other one of the jacking shaft and the mounting base being provided with a positioning recess matched with a positioning end of the positioning piece;
where when the positioning end of the positioning piece is located in the positioning recess, the jacking shaft is in a locked state; when the jacking shaft is subjected to a thrust so that the positioning end of the positioning piece disengages from the positioning recess, the jacking shaft is in a movable state.

The mounting base includes a base body and an extending base extending to a side along the base body, and the base body and the extending base are connected by a frustum-shaped transition connecting base having a large end connected with the base body and a small end connected with the extending base, and a periphery of the base body is provided with connecting holes allowing connecting pieces to pass through in order to mount the base body on the outer end of an axle-box body, and the horizontal through hole penetrates through the extending base, the transition connecting base and the base body.

According to an embodiment of the present application, a lower side of the extending base is provided with a notch penetrating through an end thereof;
a jacking portion extends downward from an outer end of the jacking shaft, and an outer end of the jacking shaft is flush with an outer end of the extending base when the positioning end of the positioning piece is located in the positioning recess; and
when the jacking portion is subjected to a thrust, the positioning end of the positioning piece disengages from the positioning recess and moves along the notch.

According to an embodiment of the present application, the outer end of the extending base is provided with a jacking gland;
the outer end of the jacking shaft is provided with a connecting portion extending downward and inclined toward a direction distal to the jacking gland, the jacking portion is formed at a free end of the connecting portion, and is provided with a vertical flat surface.

According to an embodiment of the present application, a friction block is mounted on the vertical flat surface of the jacking portion.

According to an embodiment of the present application, the positioning piece is a positioning pin having a positioning end configured to have a convex arc surface, and the positioning recess is configured to have a concave arc surface matched with the convex arc surface; and the convex arc surface is partially located in the concave arc surface.

According to an embodiment of the present application, the elastic preloaded piece is a preloaded spring having an end fastened in the open hole, and the other end fastened and sleeved on an end of the positioning pin distal to the positioning end.

According to an embodiment of a second aspect of the present application, provided is an unlocking device for a gauge-changing wheelset, including:
a thrust converting mechanism for a gauge-changing wheelset mentioned above; and
a thrust rod butted with a jacking shaft of the thrust converting mechanism and being pushed by the jacking shaft to move for unlocking.

According to an embodiment of a third aspect of the present application, a gauge-changing wheelset is provided, including: an axle, a pair of wheels and a pair of axle-box bodies, where the pair of wheels are mounted on the axle, and the pair of axle-box bodies are mounted on the axle and located on both sides of the pair of wheels; the gauge-changing wheelset further includes:
the unlocking device for a gauge-changing wheelset mentioned above, the mounting base being mounted at an outer end of an axle-box body close to the thrust rod;
where the axle is provided with a central through hole through which the thrust rod penetrates and the thrust rod has an end abutted with the jacking shaft and the other end connected with a linkage mechanism; and when a thrust is applied on the thrust rod by the jacking shaft, the thrust rod drives the linkage mechanism to unlock the wheels.

According to an embodiment of the present application, the gauge-changing wheelset further includes:
a pair of axle sleeves, where an outer circumference of a first end of each axle sleeve is provided with a wheel mounting base, an outer circumference of a second end of each shaft sleeve is provided with a section of an external spline extending along an axial direction of the axle sleeve, an inner periphery of the second end of each axle sleeve is provided with a section of a first non-self-locking thread, a pair of the first non-self-locking threads have opposite thread directions, and the pair of wheels are fastened on wheel mounting bases of the pair of axle sleeves;
the axle is provided with two sections of second non-self-locking threads each forming a non-self-locking thread pair with the first non-self-locking thread at intervals; the wheels are mounted on the axle through the axle sleeves, and each first non-self-locking thread is connected with each second non-self-locking thread in a matched manner.

According to an embodiment of the present application, an outer circumference of the axle close to the middle portion thereof is provided with a section of external spline extending in an axial direction of the axle, and the external spline of the axle is provided with an oblong hole radially extending through the external spline and having a longitudinal direction coinciding with the axial direction of the axle; and
at least one first raceway circumferentially disposed around the axle is provided between one of the second non-self-locking threads and the external spline of the axle.

The gauge-changing wheelset further includes an outer sleeve, wherein the outer sleeve is sleeved outside the axle, an inner circumference of the outer sleeve is provided with a second raceway, corresponding to the first raceway, the second raceway is provided with a rolling element mounting hole and in snap fit with the first raceway to form a rolling space in which a rolling element matched therewith is mounted through the rolling element mounting hole, such that the outer sleeve is rotatably connected outside the axle, and an internal spline matched with the external spline on the axle sleeve is provided on both axial sides of the second raceway inside the outer sleeve and located at a predetermined distance from the second raceway.

According to an embodiment of the present application, the linkage mechanism includes a locking slip ring, a thrust pin and a locking elastic piece; and
the locking slip ring is slidably sleeved at the external spline of the axle, and the locking slip ring is provided therein with an internal spline matched with the external spline of the axle, and provided externally with an external spline matched with the internal spline of the outer sleeve; an inner wall of the locking slip ring is radially provided with a pair of open grooves having openings communicated with an end of the locking slip ring; the thrust pin passes through the oblong hole, and both ends of the thrust pin protrude from the oblong hole and both ends of the thrust pin protruding from the oblong hole are embedded inside the pair of the open grooves by the opening of the open groove; the locking elastic piece is sleeved on the axle, and has an end abutted against an outer wall of the first raceway, and another end abutted against an end of the locking slip ring distal to the open groove; and when the locking elastic piece is in a natural state, the external spline outside the locking slip ring is at least partially located in the internal spline of a corresponding side of the outer sleeve to lock the rotation of the outer sleeve;
the thrust rod has an end penetrating through the central through hole of the axle and abutted against a side of the thrust pin on which the open hole is located and the other end abutted with the jacking shaft; and
a jacking shaft support ring is fixed at an end of the axle and is disposed coaxially with the central through hole, a part of the jacking shaft support ring being extending in the central through hole, and the jacking shaft support ring has an inner diameter matched with an outer diameter of the jacking shaft; and the jacking shaft enters into the central through hole through the jacking shaft support ring and pushes the thrust rod.

According to an embodiment of the present application, the first non-self-locking thread has a length greater than the length of the second non-self-locking thread and equal to half of the gauge to be changed;
an inner circumference of the outer sleeve is provided with an annular boss at the second raceway, and after the outer sleeve is connected to the axle, a pair of mounting spaces for the axle sleeves are formed between the outer sleeve and the axle at both axial sides of the rolling space; and
the locking elastic piece is a locking spring.

One or more technical solutions in the embodiments of the present application mentioned above have at least one of the following technical effects.

According to the thrust converting mechanism and the unlocking device for a gauge-changing wheelset and the gauge-changing wheelset of the present embodiment, the thrust converting mechanism includes a mounting base and a jacking shaft penetrating the mounting base axially, the mounting base is fixedly mounted outside an axle-box body; a thrust shaft is abutted with a thrust rod and when a side wall of a ground gauge-changing facility applies an axial thrust to the jacking shaft, the jacking shaft pushes the thrust rod to move to unlock the wheels. The gauge-changing operation is simple and the reliability in changing gauge is high.

The additional aspects and advantages of the present application will be partially given in the following description, and some thereof will be obvious from the following description, or be understood through the practice of the present application.

### BRIEF DESCRIPTION OF THE DRAWINGS

In order to more clearly illustrate technical solutions disclosed in the embodiments of the present application or the prior art, the drawings used in the descriptions of the embodiments or the prior art will be briefly described below. Obviously, the drawings in the following description are only certain embodiments of the present application, and other drawings can be obtained according to the drawings without any creative work for those skilled in the art.
FIG. 1 is a front schematic structural diagram showing an axle sleeve of a gauge-changing wheelset according to an embodiment of the present application;
FIG. 2 is an axial sectional schematic diagram of FIG. 1;
FIG. 3 is a perspective schematic structural diagram showing an axle sleeve of a gauge-changing wheelset according to an embodiment of the present application;
FIG. 4 is a front schematic structural diagram showing an axle of a gauge-changing wheelset according to an embodiment of the present application;
FIG. 5 is an axial sectional schematic structural diagram of a gauge-changing wheelset according to an embodiment of the present application;
FIG. 6 is an axial sectional schematic structural diagram of another gauge-changing wheelset according to an embodiment of the present application; and
FIG. 7 is a partial enlarged view of A in FIG. 6;

### Reference numerals:

10, axle; 11, external spline of axle; 12, oblong hole; 13, first raceway; 14, second non-self-locking thread; 15, central through hole; 20, axle sleeve; 21, first non-self-locking thread; 22, external spline of axle sleeve; 23, sliding bearing mounting groove; 24, wheel mounting base; 25, sliding bearing gland mounting groove; 30, wheel; 40, outer sleeve; 41, second raceway; 50, axle-box body; 60, locking slip ring; 70, locking spring; 80, thrust pin; 90, thrust rod; 100, thrust converting mechanism; 101, mounting base; 101-1, base body; 101-2, transition connecting base; 101-3, extending base; 102, jacking shaft; 102-1, jacking portion; 103, positioning pin; 104, preloaded spring; 105, friction block; 106, jacking gland; 107, jacking shaft support ring; 110, sliding bearing; 120, gear box; 130, brake disc.

### DETAILED DESCRIPTION

Embodiments of the present application are further described in detail below with reference to the drawings and embodiments. The following embodiments are intended to illustrate the application, but are not intended to limit the scope of the application.

In the description of the embodiments of the present application, it is to be noted that the orientation or positional relationships indicated by terms such as "center", "longitudinal", "lateral", "upper", "lower", "front", "rear", "left", "right", "vertical", "horizontal", "top", "bottom", "inside", "outside", etc. are based on the orientation or positional relationship shown in the drawings, and are merely for the convenience of describing the embodiments of the present application and simplifying the description, rather than indicating or implying that the device or component stated must have a particular orientation, is constructed and operated in a particular orientation, and thus is not to be construed as limiting the embodiments of the present application. Moreover, the terms "first", "second", "third", and the like are used for descriptive purposes only and are not to be construed as indicating or implying relative importance.

In the description of the embodiments of the present application, it is to be noted that unless explicitly stated and defined otherwise, the terms "connected with", and "connected" shall be understood broadly, for example, it may be either fixedly connected or detachably connected, or can be integrated; it may be mechanically connected, or electrically connected; it may be directly connected, or indirectly connected through an intermediate medium. The specific meanings of the terms above in embodiments of the present application can be understood by a person skilled in the art in accordance with specific conditions.

In the embodiments of this application, unless otherwise clearly stated and defined, the first feature being located "on" or "under" the second feature means that the first feature is in direct contact with the second feature or the first feature is in contact with the second feature by an intervening media. Also, the first feature being located "on", "above" and "on top of" the second feature may mean that the first feature is directly on or above the second feature, or it simply means that the level of the first feature is higher than the second feature. The first feature being located "under", "below" and "on bottom of" the second feature may mean that the first feature is directly under or below the second feature, or it simply means that the level of the first feature is lower than the second feature.

In the description of this specification, descriptions with reference to the terms "one embodiment", "some embodiments", "examples", "specific examples", or "some examples" etc. mean that specific features, structure, materials or characteristics described in conjunction with the embodiment or example are included in at least one embodiment or example of the embodiments of the present application. In this specification, the schematic expressions of the above terms do not necessarily refer to the same embodiment or example. Also, the described specific features, structures, materials or characteristics can be combined in any one or more embodiments or examples in a suitable manner. In addition, those skilled in the art may integrate and combine the different embodiments or examples and the features of the different embodiments or examples described in this specification without contradicting each other.

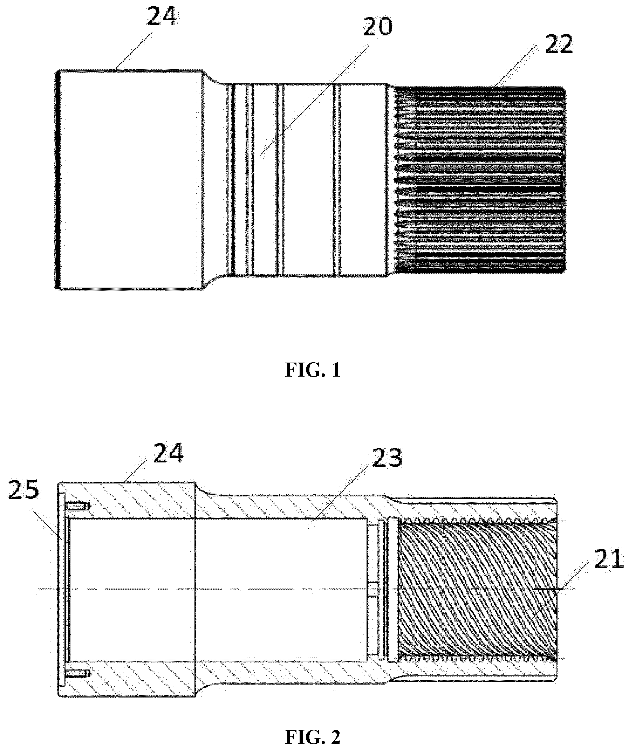

As shown in FIGS. 1 to 7, embodiments of the present application provide a thrust converting mechanism and an unlocking device for a gauge-changing wheelset and a gauge-changing wheelset.

In order to introduce the technical solutions of the present application clearly, the thrust converting mechanism and the unlocking device for a gauge-changing wheelset are described by combining the gauge-changing wheel set.

The gauge-changing wheelset according to an embodiment of the present application includes the unlocking device for a gauge-change wheelset, an axle sleeve 20, an outer sleeve 40, an axle 10 and a pair of wheels 30.

An outer circumference of a first end of each axle sleeve is provided with a wheel mounting base 24 having a width consistent with the width of the hub of each wheel 30, the wheel 30 is fastened on the wheel mounting base 24, and may be in interference fit with the wheel mounting base 24 so as to ensure the reliability of the connection between the two.

An inner periphery of the second end of each axle sleeve 20 is provided with a section of a first non-self-locking thread 21. The first non-self-locking threads 21 of the pair of axle sleeves 20 have opposite thread directions, and the pair of wheels 30 are fastened on the wheel mounting bases 24 of the pair of axle sleeves 20. The axle 10 is provided with two sections of second non-self-locking threads 14 each forming a non-self-locking thread pair with the first non-self-locking thread 21 at intervals; the wheels 30 are mounted on the axle 10 through the axle sleeves 20, and the first non-self-locking threads 21 is matched with the second non-self-locking threads 14. When the pair of wheels 30 is pushed inward or outward at the same time after the wheels 30 are unloaded, due to the non-self-locking thread pair having opposite thread directions, the pair of wheels 30 may move closer to each other or away from each other when they rotate in the same direction until they move to a set gauge-changing position so as to change the gauge. By arranging and mounting the axle sleeve 20, the wheels 30 can easily slide along the axle 10 to change the gauge, the connection structure of the axle 10 and the wheel 30 is simple, and the gauge-changing reliability is high. The axle sleeve 20 engages with the second non-self-locking thread 14 of the axle 10 by the first non-self-locking thread 21 for transmitting part of the torque, and generating relative rotation and lateral movement between the axle sleeve 20 and the axle 10 in the unlocked state.

Specifically, the first non-self-locking thread 21 has a length greater than the length of the second non-self-locking thread 14, and the length difference is equal to half of the gauge to be changed, so that both wheels 30 can move half of the gauge to be changed relative to the axle 10 during the rotation by following respective axle sleeves 20 so that a sum of the distances both wheels 30 move is equal to the desired gauge to be change.

According to an embodiment of the present application, as shown in FIG. 1 to FIG. 3, a sliding bearing mounting groove 23 extending from a first end to a second end of the axle sleeve 20 is provided at an inner circumference of the axle sleeve 20 and is used for mounting a sliding bearing 110. The sliding bearing mounting groove 23 extends to a position close to the first non-self-locking thread 21, and has a length consistent with a length of the sliding bearing 110. By arranging the sliding bearing 110, it is convenient for the axle sleeve 20 to slide stably and smoothly and a protective effect on the axle sleeve 20 is provided.

According to an embodiment of the present application, the inner circumference of the axle sleeve 20 is provided with a sealing ring mounting groove at the position between the sliding bearing mounting groove 23 and the first non-self-locking thread 21, and the sealing ring mounting groove is used for mounting the sealing ring so as to seal the end of the sliding bearing 110.

According to an embodiment of the present application, the first end of the axle sleeve 20 is provided with a sliding bearing gland mounting groove 25 used to mount the sliding bearing gland. A plurality of threaded holes are disposed at the circumferential bottom surface of the sliding bearing gland mounting groove 25 at intervals so that the sliding bearing gland is fixed in the sliding bearing gland mounting groove 25 by a fastener, and the sliding bearing 110 is fixed by the sliding bearing gland. In addition, an inner circumference of the sliding bearing gland is provided with a sealing ring mounting groove for mounting the sealing ring, thereby forming a sealing structure at both ends of the sliding bearing 110 to prevent grease from entering the joint surface of the sliding bearing 110 and the axle 10.

In order to optimize the structure, according to an embodiment of the present application, the axle sleeve 20, viewed from an outer side, has a three-stage stepped shape having a descending diameter from the first end to the second end, a position at the wheel mounting base 24 has the largest diameter and the highest strength, and adjacent steps are connected by arc surface transition so as to avoid stress concentration at the connection between the steps.

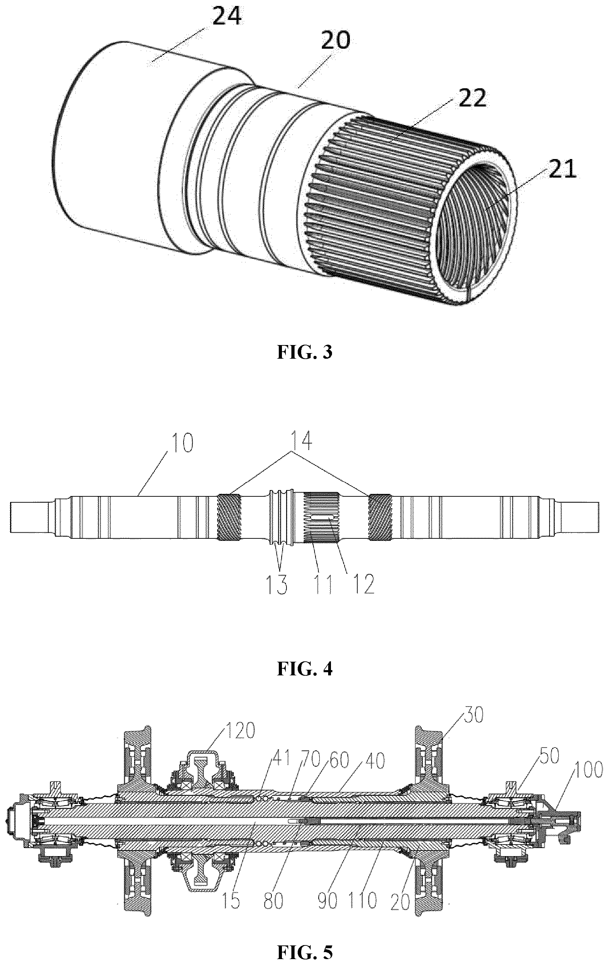

Specifically, as shown in FIGS. 4 to 7, the axle 10 is further provided with a central through hole 15 provided along the axial direction of the axle, an outer circumference of the axle 10 close to the middle portion thereof is provided with a section of external spline extending in the axial direction of the axle 10, and both axial sides of the external spline 11 of the axle at the outer circumference thereof are provided with a pair of second non-self-locking threads 14 having opposite thread directions, that is, the axle 10 is further provided with two sections of second non-self-locking thread 14 having opposite thread directions disposed at both axial sides of the external spline 11. In an embodiment, there is a spacing between each section of the second non-self-locking thread 14 and the external spline 11 of the axle. The external spline 11 of the axle 10 is provided with an oblong hole 12 radially extending through the external spline. That is, the oblong hole 12 and the external spline are overlapped, and the oblong hole has a longitudinal direction coinciding with the axial direction of the axle, that is, the oblong hole 12 has a longitudinal direction consistent with the extending direction of the external spline 11 of the axle.

In addition, the central through hole 15 provided on the axle 10 is beneficial to reduce the weight of the axle 10.

Further, a part of the axle 20 between a second non-self-locking thread 14 and the external spline 11 of the axle is provided with at least one first raceway 13 circumferentially disposed around the axle 10, and the first raceway 13 is disposed close to the external spline 11 of the axle.

In the present embodiment, the first raceway 13 has a cross section of concave semicircle.

The outer sleeve 40 is sleeved outside the axle 10, an inner circumference of the outer sleeve 40 is provided with a second raceway 41 corresponding to the first raceway 13 having the same size and shape as those of the first raceway 13. The second raceway 41 is provided with a rolling element mounting hole and in snap fit with the first raceway 13 to form a circular rolling space in which a rolling element is mounted through the rolling element mounting hole. The rolling element, which may be a rolling ball, has an outer diameter matched with an inner diameter of the rolling space. The rolling space is filled with the rolling elements. In order to prevent impurities such as dust from entering the rolling space, a sealing plug is provided at the rolling element mounting hole. By connecting the outer sleeve 40 with the axle 10 through the rolling element, the outer sleeve 40 is rotatably connected outside the axle 10, in other words, the outer sleeve 40 has rotational degree of freedom, but is restricted the movement degree of freedom, that is, the outer sleeve 40 can rotate relative to the axle 10 but cannot move.

The outer circumference of the second end of the axle sleeve 20 is provided with a section of external splines extending along its axial direction. After being mounted, the second end of the axle sleeve 20 is located inside the wheel 30 and faces the outer sleeve 40; internal splines matched with the external splines on the axle sleeve 20 are respectively disposed on both axial sides of the second raceway 42 inside the inner circumference of the outer sleeve and located at a predetermined interval from the second raceway 41. The axle sleeve 20 and the outer sleeve 40 are connected through the internal splines of the outer sleeve 40 and the external splines 22 of the axle sleeve 20 such that the axle sleeve 20 can rotate together with the outer sleeve 40, or the axle sleeve 20 can move axially relative to the outer sleeve 40. In the present embodiment, by arranging the axle sleeve 20, the torque transmission between the wheel 30 and the outer sleeve 40 and the lateral slip between the wheel 30 and the axle 10 are realized. The axle sleeve 20 has a simple and reliable structure, and can realize the conversion among various gauges.

According to an embodiment of the present application, an annular flange is formed at a position of the axle 10 where the first raceway 13 is constructed, and the annular flange has an outer diameter larger than the outer diameter of the remaining part of the axle 10 such that stop end surfaces are formed at both axial ends of the annular flange.

Specifically, both ends of the axle 10 located outside the pair of wheels 30 are respectively mounted with axle-box bodies 50.

The unlocking device according to the present embodiment includes a thrust converting mechanism 100 and a thrust rod 90, and the thrust converting mechanism 100 can directly apply thrust on the thrust rod 90 by means of an external force during changing gauge. The thrust converting mechanism is mounted an end of the axle 10 where the thrust rod 90 is located, that is, the thrust converting mechanism 100 only needs to be mounted on one end of the axle 10.

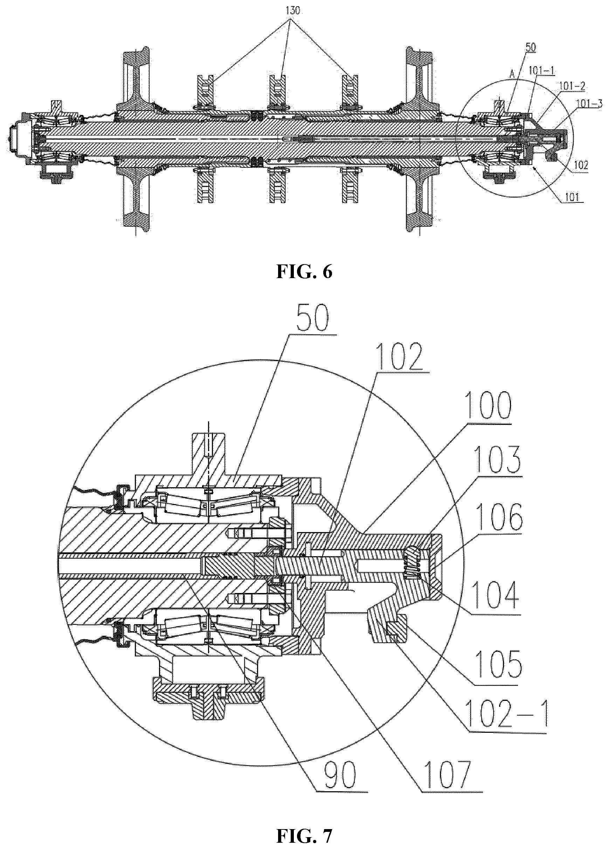

Specifically, as shown in FIGS. 6 to 7, the thrust converting mechanism 100 includes a mounting base 101 and a jacking shaft 102 axially penetrating through the mounting base 101, the mounting base 101 is fixedly mounted outside the axle-box body 50, and the jacking shaft 102 is connected to the thrust rod 90, when the track side wall of the ground gauge-changing facility applies an axial thrust to the jacking shaft 102, the jacking shaft 102 pushes the thrust rod 90 to move to unlock the wheel 30.

Specifically, the mounting base 101 is provided with a horizontal through hole along the horizontal direction; an open hole is provided in one of the jacking shaft 102 and the mounting base 101 at an engagement position between the jacking shaft 102 and the mounting base 101, that is, the open hole maybe provided not only at a radial wall of the jacking shaft 102 but also an inner wall corresponding to the mounting base 101.

The open hole has axis perpendicular to the axis of the horizontal through hole. A positioning piece is mounted in the open hole and connected with the open hole by an elastic preloaded piece such that it has an amount of movement along the axis of the open hole; the other one of the jacking shaft 102 and the mounting base 101 is provided with a positioning recess. That is, when the jacking shaft 102 is provided with the open hole, the mounting base 101 is provided with the positioning recess while when the mounting base 101 is provided with the open hole, the jacking shaft 102 is provided with the positioning recess.

Further, a positioning end of the positioning piece is matched with the positioning recess. For example, when the positioning end of the positioning piece is spherical, the positioning recess has a matched spherical surface, and the two spherical surfaces are compatible.

When the positioning end of the positioning piece is located in the positioning recess, the jacking shaft 102 is in a locked state, and when the positioning end of the positioning piece gets away from the positioning recess due to a lateral thrust from the jacking shaft 102, the jacking shaft 102 is in a movable state. Specifically, the lateral thrust acts on the positioning end of the positioning piece, thereby generating a vertical component force, compressing the elastic preloaded piece so that the positioning piece is retracted into the open hole, and the lateral positioning of the jacking shaft 102 is released. In this case, the jacking shaft 102 is in the movable state, and continues to push the jacking shaft 102 to drive the wheels 30 to unlock. The specific unlocking process is described below.

According to an embodiment of the present application, as shown in FIG. 6, the mounting base 101 includes a base body 101-1 and an extending base 101-3 extending to a side along the base body 101-1, and the base body 101-1 and the extending base 101-3 are connected by a frustum-shaped transition connecting base 101-2 having a large end connected with the base body 101-1 and a small end connected with the extending base 101-3, such structure with a large end and a small end can form a reasonable avoidance and match with the ground gauge-changing facility.

Further, a periphery of the base body is provided with connecting holes and the base body 101-1 is mounted on the outer end of the axle-box body by allowing the connecting pieces to pass through the connecting holes. The horizontal through hole penetrates through the extending base 101-3, the transition connecting base 101-2 and the base body 101-1. Specifically, the extending base 101-3, the transition connecting base 101-2 and the base body 101-1 are integrally formed, which brings convenient processing and high strength. The mounting base 101 of the present embodiment is directly mounted on the outer end of the axle-box body, and can function as the outer end cover of the axle-box body. The base body 101-1 has a shape matching the shape of the outer end of the axle-box body, for example, it can be in a square shape with rounded arcs around the square.

In the present embodiment, the base body 101-1 is plate-shaped, and the extending base 101-3 is cylinder-shaped. The lower side of the extending base 101-3 is provided with a notch penetrating through the end thereof, and the notch can be formed by cutting a side wall corresponding to a sub-arc along the axial direction from the end of the extending base 101-3; the specific cutting length is set based on the length of the desired gauge to be changed.

An outer end of the jacking shaft 102 is flush with an outer end of the extending base 101-3 when the positioning end of the positioning piece is located in the positioning recess; that is, the jacking shaft 102 is movable in the mounting base 101, specifically the extending base 101-3, the outer end of the jacking shaft 102 is flush with the outer end of the extending base 101-3 during no movement and the jacking shaft 102 moves into the extending base 101-3 along the notch during movement.

Specifically, the jacking portion 102-1 is subjected to a lateral thrust until the positioning end of the positioning piece disengages from the positioning recess and moves along the notch, and the specific movable length is equal to the length of the notch.

According to an embodiment of the present application, as shown in FIGS. 6 to 7, the outer end of the extending base 101-3 is provided with a jacking gland 106 for limiting the position of the jacking shaft 102 to avoid the jacking shaft 102 to extend out of the outer end of the extending base 101-3.

The outer end of the jacking shaft 102 is provided with a connecting portion extending downward and inclined toward a direction distal to the jacking gland 106, the jacking portion 102-1 is formed at a free end of the connecting portion, and is provided with a vertical flat surface. By arranging the jacking portion 102-1 at the lower end of the jacking shaft 102, it is convenient to push the jacking shaft 102 from the bottom of the jacking shaft 102, which on one hand, may reasonably avoid the jacking gland 106, and on the other hand, may adapt to the height of the track side wall of the ground gauge-changing facility.

According to an embodiment of the present application, a friction block 105 is mounted on the vertical flat surface of the jacking portion 102-1. By arranging the friction block 105, on one hand, the strength of the jacking portion 102-1 is increased, and on the other hand, the service life of the jacking portion 102-1 is prolonged. In addition, when the friction block 105 is worn out, it may be directly replaced without replacing the jacking portion 102-1 and mounting base 101, which saves costs.

According to an embodiment of the present application, the positioning piece is a positioning pin 103 having a positioning end configured to have a convex arc surface, for example a convex spherical surface, and the positioning recess is configured to have a concave arc surface matched with the convex arc surface, for example, a concave spherical surface. The convex arc surface is located in the concave arc surface such that the positioning end can be retracted from the positioning recess in time when it is subjected to a lateral thrust. It should be noted that, when the positioning pin 103 is subjected to a lateral thrust, its convex arc surface is subjected to a vertical thrust force component and a lateral thrust force component, and the vertical thrust force component compresses the elastic preloaded piece so that the positioning pin 103 moves downward, and the lateral thrust component pushes the positioning pin 103 away from the positioning recess.

According to an embodiment of the present application, the elastic preloaded piece is a preloaded spring 104 having an end fastened in the open hole, and the other end fastened and sleeved on an end of the positioning pin 103 distal to the positioning end. The positioning pin 103 may be provided with a connecting end with a diameter smaller than that of the positioning end, a positioning step is formed at the connection between the connecting end and the positioning end, and the preloaded spring 104 is directly sleeved on the connecting end and abuts against the positioning step.

According to an embodiment of the present application, in the gauge-changing wheelset, the thrust rod 90 has an end abutted with the jacking shaft 102 and the other end connected with a linkage mechanism; and a thrust is applied on the thrust rod 90 by the jacking shaft 102 such that the thrust rod 90 drives the linkage mechanism to unlock the wheels 30.

According to an embodiment, the linkage mechanism includes a locking slip ring 60, a thrust pin 80 and a locking elastic piece. In an embodiment, the locking slip ring 60 is slidably sleeved at the external spline 11 of the axle, and the locking slip ring is provided therein with an internal spline matched with the external spline 11 of the axle, and provided externally with an external spline matched with the internal spline of the outer sleeve 40. An inner wall of the locking slip ring 60 is radially provided with a pair of open grooves having openings communicated with an end of the locking slip ring 60. The thrust pin 80 passes through the oblong hole 12, and both ends of the thrust pin 80 protrude from the oblong hole 12 and both ends of the thrust pin 80 protruding from the oblong hole 12 are embedded inside the pair of the open grooves by the openings of the open grooves. The thrust pin 80 has a length same as a distance between the top walls of a pair of open grooves, and both ends of the thrust pin 80 abut against the top walls of the open groove. In addition, the thrust pin 80 has a width consistent with widths of the open grooves such that the thrust pin 80 and the locking slip ring 60 have reliable connection.

In order to facilitate the axial movement of the thrust pin 80 along the oblong hole 12, the thrust pin 80 may have a width smaller than the length of the oblong hole 12, and a thickness less than or equal to the width of the oblong hole 12. In addition, the width of the locking slip ring 60 should not be too wide to ensure that the locking slip ring 60 can have an amount of movement in the space between the second raceway 41 of the outer sleeve 40 and the internal spline of the outer sleeve 40. In addition, the oblong hole 12 should have a length lightly smaller than the length of the external spline 11 of the axle, so that the locking slip ring 60 moves always on the external spline 11 of the axle.

The locking elastic piece, for example, an elastic spring 70, is sleeved on the axle, having an end abutted against an outer wall, i.e., a stop end surface of the first raceway 13, and the other end abutted against an end of the locking slip ring 60 distal to the open groove. When the locking elastic piece is in a natural state, the external spline outside the locking slip ring 60 are at least partially located in the internal spline of a corresponding side of the outer sleeve 40 to lock the rotation of the outer sleeve 40 for fixing the outer sleeve relative to the axle 10. In this case, the wheels 30 and the axle sleeve 20 as well as the outer sleeve 40 and the axle 10 are integrated and have no relative rotation relative to each other, and the wheels 30 are in a locked state.

The thrust rod 90 has an end penetrating through the central through hole of the axle and abutted against a side of the thrust pin 80 on which the open hole is located and the other end abutted with the jacking shaft 102. After the axle-box body is lifted by an unlocking rail to unload the wheel 30, a thrust is applied to the thrust pin 80 through the thrust rod 90, the thrust rod 80 pushes the thrust pin 80 to drive the locking slip ring 60 to compress the locking elastic piece on the axle 10 and move away from the internal splines of the outer sleeve 40 to disengage the internal splines of the outer sleeve 40, thereby unlocking the rotational degree of freedom of the outer sleeve 40. In this case, when the wheels 30 are pushed, since the axle sleeve 20 is connected with the axle 10 through the non-self-locking thread pair, the outer sleeve 40, the wheel 30 and the axle sleeve 20 will rotate together around the axle 10, the first non-self-locking thread 21 of the axle sleeve 20 moves along the second non-self-locking thread 14 of the axle 10 during the rotation, so that the wheel 30 moves along with the axle sleeve 20 during the rotation until the gauge is changed.

After the gauge is changed, the ground gauge-changing facility will no longer apply thrust on the jacking shaft 102, that is, the thrust from the thrust rod 90 onto the thrust pin 80 is removed, and the thrust pin 80 will follow the locking slip ring 60 to return to its original position under the elastic reset action of the locking elastic piece, that is, the external splines of the locking slip ring 60 are re-inserted into the external splines of the outer sleeve 40 to lock the rotational degree of freedom of the outer sleeve 40. In this case, the axle sleeve 20 and the outer sleeve 40 cannot rotate relative to the axle 10, the axle sleeve 20 and the outer sleeve 40 can only rotate together with the axle 10, that is, the axle sleeve 20 and the outer sleeve 40 are locked on the axle 10, and the wheel 30 is re-locked.

In order to ensure the pushing stability of the jacking shaft 102, a jacking shaft support ring 107 is fixed at the end of the axle. The jacking shaft support ring 107 is coaxial with the central through hole 15, and partially extends into the central through hole 15, so that the jacking shaft support ring 107 can be mounted reliably. The jacking shaft support ring 107 has an inner diameter matching the outer diameter of the jacking shaft 102 so as to ensure that the jacking shaft 102 does not shake during the movement process, the jacking shaft 102 enters the central through hole 15 through the jacking shaft support ring 107 and pushes the thrust rod 90, and the movement process is smooth.

The gauge-changing wheelset according to the embodiment has convenient and reliable gauge-changing operation, and simple overall structure.

In an embodiment, the first non-self-locking thread 21 is a trapezoidal thread, and correspondingly, the second non-self-locking thread 14 is a trapezoidal thread matching the trapezoidal thread of the first non-self-locking thread 21, resulting in reliable performance.

It should be noted that the locking elastic piece may also be other elastic sleeves with an amount of elasticity.

According to an embodiment of the present application, an inner circumference of the outer sleeve 40 is provided with an annular boss at the second raceway 41, and the second raceway 41 is formed on the annular boss. After the outer sleeve 40 and the axle 10 are connected by a rolling ball, a pair of mounting spaces for the axle sleeves 20 are formed between the outer sleeve 40 and the axle 10 at both axial sides of the rolling space. During the sliding process, the sliding bearing 110 is in sliding contact with the axle 10 and is inserted into the outer sleeve 40 from the mounting space; the external spline 22 of the axle sleeve moves axially relative to the internal spline of the outer sleeve 40 until the axle sleeve 20 is rotated when the first non-self-locking thread 21 of the axle 20 is in contact with the second non-self-locking thread 14 of the axle 10 such that the first non-self-locking thread 21 is screwed into the second non-self-locking thread 14.

For a gauge-changing wheelset for motor vehicle, a gear box 120 is mounted outside the outer sleeve 40, and for a gauge-changing wheelset for trailer, a plurality of brake discs 130 are mounted outside the outer sleeve 40.

In order to improve the reliability of the connection between the outer sleeve 40 and the axle 10, according to an embodiment of the present application, there are two first raceways 13 arranged side by side. Correspondingly, there are two second raceways 41, thus forming two raceway spaces arranged side by side.

Further, the axle 10 is divided into a main half shaft and an auxiliary half shaft by each first raceway 13, and the part of the axle 10 provided with the external splines and the oblong hole 12 is the main half shaft. The locking slip ring 60 is mounted on the main half shaft, and the open groove of the locking slip ring 60 faces towards the free end of the main half shaft, and the locking spring 70 is mounted between the stop end surface of the annular flange and the locking slip ring 60.

For optimizing the structure, the first raceway 13 is disposed close to the external spline 11 of the axle 10.

According to an embodiment of the present application, a distance between the external splines 11 of the axle and the adjacent second non-self-locking threads 14 is equal to a distance between the annular flange and the adjacent second non-self-locking threads 14, and both of the distances are equal to half of the gauge to be changed and the distance is a movement spacing of the first non-self-locking thread 21 of the axle sleeve 20.

According to an embodiment of the present application, the axle 10 is configured at each end as a stepped shaft with a diameter smaller than the middle diameter, so that an end of the stepped shaft is used to mount the axle-box body 50.

According to an embodiment of the present application, sliding sections are respectively formed on the intermediate shaft of the stepped shaft between each section of the second non-self-locking thread 14 and the shaft end of the intermediate shaft, so that the sliding bearings 110 of the axle sleeve 20 slides relative to the axle 10.

According to an embodiment, the gauge-changing process is shown as follows.
1. unlocking stage: the axle-box body 50 is gradually lifted by an unlocking rail, so that the wheel 30 is unloaded. After the thrust converting mechanism 100 is triggered, the jacking shaft 102 is pushed inward to contact the thrust rod 90, and the thrust pin 80 and the locking slip ring 60 are pushed to move inward and compress the locking spring 70 until the locking slip ring 60 is out of contact with the internal splines of the outer sleeve 40, and the rotational constraint between the axle 10 and the axle sleeve 20 is released.
2. gauge-changing stage: after entering the gauge-changing stage, the wheels 30 move inward (or outward) under the action of the gauge-changing lateral force, and the wheels 30 and the axle sleeve 20 rotate together around the non-self-locking thread pair to reach a target gauge.
3. locking stage: after entering the locking section, the unlocking rail gradually lowers and no longer plays supporting role, and the locking slip ring 60 moves outward under the thrust of the locking spring 70 and is inserted into the internal spline of the outer sleeve 40 to be re-locked. The jacking shaft 102 recovers under the action of the restoring force of the locking spring 70 and is out of contact with the thrust rod 90, then the gauge-changing process ends, the wheelset is completely locked, and the normal operation state is re-entered.

The implementations above are only used to illustrate the present application, but not to limit the application.

## Claims

1. A thrust converting mechanism (100) for a gauge-changing wheelset of a train, comprising:
a mounting base (101), provided with a horizontal through hole along a horizontal direction; and
a jacking shaft (102), movably disposed in the horizontal through hole in a penetrating manner, an open hole being provided in one of the jacking shaft (102) and the mounting base (101) at an engagement position between the jacking shaft (102) and the mounting base (101), the open hole having an axis perpendicular to an axis of the horizontal through hole, a positioning piece being mounted in the open hole and connected with the open hole by an elastic preloaded piece; the other one of the jacking shaft (102) and the mounting base (101) being provided with a positioning recess matched with a positioning end of the positioning piece;
wherein when the positioning end of the positioning piece is located in the positioning recess, the jacking shaft (102) is in a locked state; when the jacking shaft (102) is subjected to a thrust so that the positioning end of the positioning piece disengages from the positioning recess, the jacking shaft (102) is in a movable state;
**characterised in that**
the mounting base (101) comprises a base body (101-1) and an extending base (101-3) extending to a side along the base body (101-1), and the base body (101-1) and the extending base (101-3) are connected by a frustum-shaped transition connecting base (101-2) having a large end connected with the base body (101-1) and a small end connected with the extending base (101-3), and a periphery of the base body (101-1) is provided with connecting holes allowing connecting pieces to pass through in order to mount the base body (101-1) on the outer end of an axle-box body, and the horizontal through hole penetrates through the extending base (101-3), the transition connecting base (101-2) and the base body (101-1).

2. The thrust converting mechanism (100) of claim 1, wherein a lower side of the extending base (101-3) is provided with a notch penetrating through an end thereof;
a jacking portion (102-1) extends downward from an outer end of the jacking shaft (102), and an outer end of the jacking shaft (102) is flush with an outer end of the extending base (101-3) when the positioning end of the positioning piece is located in the positioning recess; and
when the jacking portion (102-1) is subjected to a thrust, the positioning end of the positioning piece disengages from the positioning recess and moves along the notch.

3. The thrust converting mechanism (100) of claim 2, wherein the outer end of the extending base (101-3) is provided with a jacking gland (106); and
the outer end of the jacking shaft (102) is provided with a connecting portion extending downward and inclined toward a direction distal to the jacking gland (106), the jacking portion (102-1) is formed at a free end of the connecting portion, and is provided with a vertical flat surface.

4. The thrust converting mechanism (100) of claim 3, wherein a friction block (105) is mounted on the vertical flat surface of the jacking portion (102-1).

5. The thrust converting mechanism (100) for a gauge-changing wheelset of any one of claims 1 to 4, wherein the positioning piece is a positioning pin (103) having a positioning end configured to have a convex arc surface, and the positioning recess is configured to have a concave arc surface matched with the convex arc surface; and the convex arc surface is partially located in the concave arc surface; and

6. The thrust converting mechanism (100) of claim 5, wherein the elastic preloaded piece is a preloaded spring (104) having an end fastened in the open hole, and the other end fastened and sleeved on an end of the positioning pin (103) distal to the positioning end.

7. An unlocking device for a gauge-changing wheelset, comprising: the thrust converting mechanism (100) for a gauge-changing wheelset of any one of claims 1 to 6; and a thrust rod (90) butted with a jacking shaft (102) of the thrust converting mechanism (100) and being pushed by the jacking shaft (102) to move for unlocking.

8. A gauge-changing wheelset, comprising: an axle (10), a pair of wheels (30) and a pair of axle-box bodies (50), wherein the pair of wheels (30) are mounted on the axle (10), and the pair of axle-box bodies (50) are mounted on the axle (10) and located on both sides of the pair of wheels (30); further comprising:
the unlocking device for a gauge-changing wheelset of claim 7, the mounting base (101) being mounted at an outer end of an axle-box body (50) close to the thrust rod (90);
wherein the axle (10) is provided with a central through hole (15) through which the thrust rod (90) penetrates, and the thrust rod (90) has an end abutted with the jacking shaft (102) and the other end connected with a linkage mechanism; and when a thrust is applied on the thrust rod (90) by the jacking shaft (102), the thrust rod (90) drives the linkage mechanism to unlock the wheels (30).

9. The gauge-changing wheelset of claim 8, further comprising:
a pair of axle sleeves (20), wherein an outer circumference of a first end of each axle sleeve (20) is provided with a wheel mounting base (24), an outer circumference of a second end of each shaft sleeve is provided with a section of an external spline extending along an axial direction of the axle sleeve (20), an inner periphery of the second end of each axle sleeve (20) is provided with a section of a first non-self-locking thread (21), a pair of the first non-self-locking threads (21) have opposite thread directions, and the pair of wheels (30) are fastened on wheel mounting bases (24) of the pair of axle sleeves (20);
the axle (10) is provided with two sections of second non-self-locking threads (14) each forming a non-self-locking thread pair with the first non-self-locking thread (21) at intervals; the wheels (30) are mounted on the axle (10) through the axle sleeves (20), and each first non-self-locking thread (21) is connected with each second non-self-locking thread (14) in a matched manner.

10. The gauge-changing wheelset of claim 9, wherein
an outer circumference of the axle (10) close to the middle portion thereof is provided with a section of external spline extending in an axial direction of the axle (10), and the external spline (11) of the axle (10) is provided with an oblong hole (12) radially extending through the external spline and having a longitudinal direction coinciding with the axial direction of the axle (10); and
at least one first raceway (13) circumferentially disposed around the axle (10) is provided between one of the second non-self-locking threads (14) and the external spline (11) of the axle (10);
the gauge-changing wheelset further comprises an outer sleeve (40), wherein the outer sleeve (40) is sleeved outside the axle (10), an inner circumference of the outer sleeve (40) is provided with a second raceway (41), corresponding to the first raceway (13), the second raceway (41) is provided with a rolling element mounting hole and in snap fit with the first raceway (13) to form a rolling space in which a rolling element matched therewith is mounted through the rolling element mounting hole, such that the outer sleeve (40) is rotatably connected outside the axle (10), and an internal spline matched with the external spline (22) on the axle sleeve (20) is provided on both axial sides of the second raceway (41) inside the outer sleeve (40) and located at a predetermined distance from the second raceway (41).

11. The gauge-changing wheelset of claim 10, wherein the linkage mechanism comprises a locking slip ring (60), a thrust pin (80) and a locking elastic piece;
the locking slip ring (60) is slidably sleeved at the external spline (11) of the axle (10), and the locking slip ring (60) is provided therein with an internal spline matched with the external spline (11) of the axle (10), and provided externally with an external spline matched with the internal spline of the outer sleeve (40); an inner wall of the locking slip ring (60) is radially provided with a pair of open grooves having openings communicated with an end of the locking slip ring (60); the thrust pin (80) passes through the oblong hole (12), and both ends of the thrust pin (80) protrude from the oblong hole (12) and both ends of the thrust pin (80) protruding from the oblong hole (12) are embedded inside the pair of the open grooves by the opening of the open groove; the locking elastic piece is sleeved on the axle (10), having an end abutted against an outer wall of the first raceway (13), and the other end abutted against an end of the locking slip ring (60) away from the open groove; and when the locking elastic piece is in a natural state, the external spline outside the locking slip ring (60) is at least partially located in the internal spline of a corresponding side of the outer sleeve (40) to lock the rotation of the outer sleeve (40);
the thrust rod (90) has an end penetrating through the central through hole (15) of the axle (10) and abutted against a side of the thrust pin (80) on which the open hole is located and the other end abutted with the jacking shaft (102); and
a jacking shaft support ring (107) is fixed at an end of the axle (10) and is disposed coaxially with the central through hole (15), a part of the jacking shaft support ring (107) being extending in the central through hole (15), the jacking shaft support ring (107) has an inner diameter matched with an outer diameter of the jacking shaft (102); and the jacking shaft (102) enters into the central through hole (15) through the jacking shaft support ring (107) and pushes the thrust rod (90).

12. The gauge-changing wheelset of claim 11, wherein
the first non-self-locking thread (21) has a length greater than the length of the second non-self-locking thread (14) and equal to half of the gauge to be changed;
an inner circumference of the outer sleeve (40) is provided with an annular boss at the second raceway (41), and after the outer sleeve (40) is connected to the axle (10), a pair of mounting spaces for the axle sleeves (20) are formed between the outer sleeve (40) and the axle (10) at both axial sides of the rolling space; and
the locking elastic piece is a locking spring (70).

## Patentansprüche

1. Schubumsetzungsmechanismus (100) für einen Radsatz mit veränderlicher Spurweite eines Zugs, umfassend:
eine Montageplatte (101), die mit einem horizontalen Durchgangsloch entlang einer horizontalen Richtung versehen ist; und
einen Hubschaft (102), der eindringend beweglich in dem horizontalen Durchgangsloch angeordnet ist, wobei ein offenes Loch in einem von dem Hubschaft (102) und der Montageplatte (101) in einer Eingriffsposition zwischen dem Hubschaft (102) und der Montageplatte (101) bereitgestellt wird, wobei das offene Loch eine Achse aufweist, die zu einer Achse des horizontalen Durchgangslochs rechtwinklig steht, wobei ein Positionierstück in dem offenen Loch montiert und mit dem offenen Loch durch ein elastisches vorgespanntes Stück verbunden ist; wobei der andere von dem Hubschaft (102) und der Montageplatte (101) mit einer Positioniervertiefung versehen ist, die zu einem Positionierende des Positionierstücks passt;
wobei, wenn sich das Positionierende des Positionierstücks in der Positioniervertiefung befindet, sich der Hubschaft (102) in einem verriegelten Zustand befindet; wobei, wenn der Hubschaft (102) einem Schub ausgesetzt wird, so dass sich das Positionierende des Positionierstücks aus der Positioniervertiefung löst, sich der Hubschaft (102) in einem bewegbaren Zustand befindet;
**dadurch gekennzeichnet, dass** die Montageplatte (101) einen Basiskörper (101-1) und eine Verlängerungsbasis (101-3), die sich zu einer Seite entlang des Basiskörpers (101-1) erstreckt, umfasst, und der Basiskörper (101-1) und die Verlängerungsbasis (101-3) durch eine kegelstumpfförmige Übergangsverbindungsbasis (101-2) verbunden sind, die ein großes Ende, das mit dem Basiskörper (101-1) verbunden ist, und ein kleines Ende, das mit der Verlängerungsbasis (101-3) verbunden ist, aufweist, und eine Peripherie des Basiskörpers (101-1) mit Verbindungslöchern versehen ist, die Verbindungsstücke hindurch lassen, um den Basiskörper (101-1) an dem äußeren Ende eines Achslagerkörpers zu montieren, und das horizontale Durchgangsloch die Verlängerungsbasis (101-3), die Übergangsverbindungsbasis (101-2) und den Basiskörper (101-1) durchdringt.

2. Schubumsetzungsmechanismus (100) nach Anspruch 1, wobei
eine untere Seite der Verlängerungsbasis (101-3) mit einer Kerbe versehen ist, die durch ein Ende derselben eindringt;
sich ein Hubabschnitt (102-1) von einem äußeren Ende des Hubschafts (102) nach unten erstreckt, und ein äußeres Ende des Hubschafts (102) mit einem äußeren Ende der Verlängerungsbasis (101-3) auf gleicher Höhe liegt, wenn sich das Positionierende des Positionierstücks in der Positioniervertiefung befindet; und
wenn der Hubabschnitt (102-1) einem Schub ausgesetzt wird, sich das Positionierende des Positionierstücks aus der Positioniervertiefung löst und sich entlang der Kerbe bewegt.

3. Schubumsetzungsmechanismus (100) nach Anspruch 2, wobei
das äußere Ende der Verlängerungsbasis (101-3) mit einer Hubstopfbüchse (106) versehen ist; und
das äußere Ende des Hubschafts (102) mit einem Verbindungsabschnitt versehen ist, der sich nach unten erstreckt und in eine Richtung geneigt ist, die zu der Hubstopfbüchse (106) distal ist, wobei der Hubabschnitt (102-1) an einem freien Ende des Verbindungsabschnitts gebildet ist und mit einer vertikalen flachen Oberfläche versehen ist.

4. Schubumsetzungsmechanismus (100) nach Anspruch 3, wobei ein Reibungsblock (105) auf der vertikalen flachen Oberfläche des Hubabschnitts (102-1) montiert ist.

5. Schubumsetzungsmechanismus (100) für einen Radsatz mit veränderlicher Spurweite nach einem der Ansprüche 1 bis 4, wobei das Positionierstück ein Positionierstift (103) ist, der ein Positionierende aufweist, das dazu konfiguriert ist, eine konvexe Bogenfläche aufzuweisen, und die Positioniervertiefung dazu konfiguriert ist, eine konkave Bogenfläche aufzuweisen, die zu der konvexen Bogenfläche passt; und sich die konvexe Bogenfläche teilweise in der konkaven Bogenfläche befindet.

6. Schubumsetzungsmechanismus (100) nach Anspruch 5, wobei das elastische vorgespannte Stück eine vorgespannte Feder (104) ist, die ein Ende aufweist, das in dem offenen Loch befestigt ist, und das andere Ende an einem Ende des Positionierstifts (103) distal zum Positionierende befestigt und aufgeschoben ist.

7. Entriegelungsvorrichtung für einen Radsatz mit veränderlicher Spurweite, umfassend: den Schubumsetzungsmechanismus (100) für einen Radsatz mit veränderlicher Spurweite nach einem der Ansprüche 1 bis 6; und eine Schubstange (90), die mit einem Hubschaft (102) des Schubumsetzungsmechanismus (100) zusammenstößt und von dem Hubschaft (102) geschoben wird, um sich zur Entriegelung zu bewegen.

8. Radsatz mit veränderlicher Spurweite, umfassend: eine Achse (10), ein Paar Räder (30) und ein Paar Achslagerkörper (50), wobei das Paar Räder (30) an der Achse (10) montiert ist, und das Paar Achslagerkörper (50) an der Achse (10) montiert ist und sich auf beiden Seiten des Räderpaars (30) befindet; ferner umfassend:
die Entriegelungsvorrichtung für einen Radsatz mit veränderlicher Spurweite nach Anspruch 7, die Montageplatte (101), die an einem äußeren Ende eines Achslagerkörpers (50) in der Nähe der Schubstange (90) montiert ist;
wobei die Achse (10) mit einem mittleren Durchgangsloch (15) versehen ist, durch das die Schubstange (90) eindringt, und die Schubstange (90) ein Ende aufweist, das mit dem Hubschaft (102) zusammenstößt, und das andere Ende mit einem Gestänge verbunden ist; und wenn Schub auf die Schubstange (90) durch den Hubschaft (102) ausgeübt wird, die Schubstange (90) das Gestänge dazu antreibt, die Räder (30) zu entriegeln.

9. Radsatz mit veränderlicher Spurweite nach Anspruch 8, ferner umfassend:
ein Paar Achsbuchsen (20), wobei ein äußerer Umfang eines ersten Endes jeder Achsbuchse (20) mit einer Radmontageplatte (24) versehen ist, ein Außenumfang eines zweiten Endes jeder Schaftbuchse mit einem Teilstück einer Außenverzahnung versehen ist, die sich entlang einer axialen Richtung der Achsbuchse (20) erstreckt, eine innere Peripherie des zweiten Endes jeder Achsbuchse (20) mit einem Teilstück eines ersten nicht selbstsichernden Gewindes (21) versehen ist, ein Paar der ersten nicht selbstsichernden Gewinde (21) entgegengesetzte Gewinderichtungen aufweist, und das Paar Räder (30) an den Radmontageplatten (24) des Achsbuchsenpaars (20) befestigt ist;
wobei die Achse (10) mit zwei Teilstücken von zweiten nicht selbstsichernden Gewinden (14) versehen ist, die jeweils ein nicht selbstsicherndes Gewindepaar mit dem ersten nicht selbstsichernden Gewinde (21) in Intervallen bilden; wobei die Räder (30) an der Achse (10) über die Achsbuchsen (20) montiert sind, und jedes erste nicht selbstsichernde Gewinde (21) mit jedem zweiten nicht selbstsichernden Gewinde (14) passend verbunden ist.

10. Radsatz mit veränderlicher Spurweite nach Anspruch 9, wobei
ein Außenumfang der Achse (10) in der Nähe des mittleren Abschnitts derselben mit einem Teilstück einer Außenverzahnung versehen ist, das sich in einer axialen Richtung der Achse (10) erstreckt, und die Außenverzahnung (11) der Achse (10) mit einem Langloch (12) versehen ist, das sich radial durch die Außenverzahnung erstreckt und eine Längsrichtung aufweist, die mit der axialen Richtung der Achse (10) zusammenfällt; und
mindestens ein erster Laufring (13), der umfangsmäßig um die Achse (10) herum angeordnet ist, zwischen einem von den zweiten nicht selbstsichernden Gewinden (14) und der Außenverzahnung (11) der Achse (10) bereitgestellt wird;
der Radsatz mit veränderlicher Spurweite ferner eine äußere Buchse (40) umfasst, wobei die äußere Buchse (40) außerhalb der Achse (10) aufgeschoben ist, ein Innenumfang der äußeren Buchse (40) mit einem zweiten Laufring (41) versehen ist, der dem ersten Laufring (13) entspricht, wobei der zweite Laufring (41) mit einem Wälzkörpermontageloch versehen ist und mit dem ersten Laufring (13) einrastet, um einen Wälzraum zu bilden, in dem ein dazu passender Wälzkörper durch das Wälzkörpermontageloch hindurch montiert ist, so dass die äußere Buchse (40) drehbar außerhalb der Achse (10) verbunden ist, und eine Innenverzahnung, die zu der Außenverzahnung (22) auf der Achsbuchse (20) passt, auf beiden axialen Seiten des zweiten Laufrings (41) innerhalb der äußeren Buchse (40) bereitgestellt wird und sich in einem vorbestimmten Abstand von dem zweiten Laufring (41) befindet.

11. Radsatz mit veränderlicher Spurweite nach Anspruch 10, wobei
das Gestänge einen Verriegelungsschleifring (60), einen Schubstift (80) und ein elastisches Verriegelungsstück umfasst;
der Verriegelungsschleifring (60) an der Außenverzahnung (11) der Achse (10) verschiebbar aufgeschoben ist, und der Verriegelungsschleifring (60) darin mit einer Innenverzahnung versehen ist, die zu der Außenverzahnung (11) der Achse (10) passt, und extern mit einer Außenverzahnung versehen, die zu der Innenverzahnung der äußeren Buchse (40) passt; eine innere Wand des Verriegelungsschleifrings (60) radial mit einem Paar offener Nuten versehen ist, die Öffnungen aufweisen, die mit einem Ende des Verriegelungsschleifrings (60) in Verbindung stehen; der Schubstift (80) durch das Langloch (12) geht, und die beiden Enden des Schubstifts (80) aus dem Langloch (12) vorstehen, und die beiden Enden des Schubstifts (80), die aus dem Langloch (12) vorstehen, in dem offenen Nutenpaar durch die Öffnung der offenen Nut eingebettet sind; das elastische Verriegelungsstück auf die Achse (10) aufgeschoben ist, und ein Ende, das an einer äußeren Wand des ersten Laufrings (13) anliegt, und das andere Ende, das an einem Ende des Verriegelungsschleifrings (60) von der offenen Nut weg anliegt, aufweist; und wenn sich das elastische Verriegelungsstück in einem natürlichen Zustand befindet, sich die Außenverzahnung außerhalb des Verriegelungsschleifrings (60) mindestens teilweise in der Innenverzahnung einer entsprechenden Seite der äußeren Buchse (40) befindet, um die Drehung der äußeren Buchse (40) zu verriegeln;
die Schubstange (90) ein Ende, das durch das mittlere Durchgangsloch (15) der Achse (10) eindringt und an einer Seite des Schubstifts (80) anliegt, auf der sich das offene Loch befindet, und das andere Ende, das an dem Hubschaft (102) anliegt, aufweist; und
ein Hubschaftstützring (107) an einem Ende der Achse (10) befestigt ist und koaxial zu dem mittleren Durchgangsloch (15) angeordnet ist, wobei sich ein Teil des Hubschaftstützrings (107) in dem mittleren Durchgangsloch (15) erstreckt, der Hubschaftstützring (107) einen Innendurchmesser aufweist, der zu einem Außendurchmesser des Hubschafts (102) passt; und der Hubschaft (102) in das mittlere Durchgangsloch (15) durch den Hubschaftstützring (107) hindurch eintritt und die Schubstange (90) schiebt.

12. Radsatz mit veränderlicher Spurweite nach Anspruch 11, wobei
das erste nicht selbstsichernde Gewinde (21) eine Länge aufweist, die größer als die Länge des zweiten nicht selbstsichernden Gewindes (14) und gleich der Hälfte der zu ändernden Spurweite ist;
ein Innenumfang der äußeren Buchse (40) mit einer ringförmigen Erhebung an dem zweiten Laufring (41) versehen ist, und nachdem die äußere Buchse (40) mit der Achse (10) verbunden wurde, ein Paar Montageräume für die Achsbuchsen (20) zwischen der äußeren Buchse (40) und der Achse (10) auf beiden axialen Seiten des Wälzraums gebildet werden; und
das elastische Verriegelungsstück eine Verriegelungsfeder (70) ist.

## Revendications

1. Mécanisme de conversion de poussée (100) pour un ensemble de roues à écartement variable d'un train, comprenant :
une base de montage (101), pourvue d'un trou traversant horizontal le long d'une direction horizontale ; et
un arbre de levage (102), disposé de manière mobile dans le trou traversant horizontal de manière pénétrante, un trou ouvert étant prévu dans l'un de l'arbre de levage (102) et de la base de montage (101) au niveau d'une position de mise en prise entre l'arbre de levage (102) et la base de montage (101), le trou ouvert présentant un axe perpendiculaire à un axe du trou traversant horizontal, une pièce de positionnement étant montée dans le trou ouvert et reliée au trou ouvert par une pièce préchargée élastique ; l'autre de l'arbre de levage (102) et de la base de montage (101) étant pourvu d'un évidement de positionnement mis en correspondance avec une extrémité de positionnement de la pièce de positionnement ;
dans lequel lorsque l'extrémité de positionnement de la pièce de positionnement est située dans l'évidement de positionnement, l'arbre de levage (102) est dans un état verrouillé ; lorsque l'arbre de levage (102) est soumis à une poussée de sorte que l'extrémité de positionnement de la pièce de positionnement se libère de l'évidement de positionnement, l'arbre de levage (102) est dans un état mobile ;
**caractérisé en ce que**
la base de montage (101) comprend un corps de base (101-1) et une base d'extension (101-3) s'étendant vers un côté le long du corps de base (101-1), et le corps de base (101-1) et la base d'extension (101-3) sont connectés par une base de connexion de transition de forme tronconique (101-2) présentant une grande extrémité connectée au corps de base (101-1) et une petite extrémité connectée à la base d'extension (101-3), et une périphérie du corps de base (101-1) est pourvue de trous de connexion permettant à des pièces de connexion de passer de manière traversante afin de monter le corps de base (101-1) sur l'extrémité extérieure d'un corps de boîte d'essieu, et le trou traversant horizontal pénètre à travers la base d'extension (101-3), la base de connexion de transition (101-2) et le corps de base (101-1).

2. Mécanisme de conversion de poussée (100) selon la revendication 1, dans lequel un côté inférieur de la base d'extension (101-3) est pourvu d'une encoche pénétrant à travers une extrémité de celui-ci ;
une partie de levage (102-1) s'étend vers le bas à partir d'une extrémité extérieure de l'arbre de levage (102), et une extrémité extérieure de l'arbre de levage (102) affleure une extrémité extérieure de la base d'extension (101-3) lorsque l'extrémité de positionnement de la pièce de positionnement est située dans l'évidement de positionnement ; et
lorsque la partie de levage (102-1) est soumise à une poussée, l'extrémité de positionnement de la pièce de positionnement se libère de l'évidement de positionnement et se déplace le long de l'encoche.

3. Mécanisme de conversion de poussée (100) selon la revendication 2, dans lequel l'extrémité extérieure de la base d'extension (101-3) est pourvue d'un presse-étoupe de levage (106) ; et
l'extrémité extérieure de l'arbre de levage (102) est pourvue d'une partie de connexion s'étendant vers le bas et inclinée vers une direction distale par rapport au presse-étoupe de levage (106), la partie de levage (102-1) est formée au niveau d'une extrémité libre de la partie de connexion, et est pourvue d'une surface plate verticale.

4. Mécanisme de conversion de poussée (100) selon la revendication 3, dans lequel un bloc de friction (105) est monté sur la surface plate verticale de la partie de levage (102-1).

5. Mécanisme de conversion de poussée (100) pour un ensemble de roues à écartement variable selon l'une quelconque des revendications 1 à 4, dans lequel la pièce de positionnement est une broche de positionnement (103) présentant une extrémité de positionnement configurée pour présenter une surface d'arc convexe, et l'évidement de positionnement est configuré pour présenter une surface d'arc concave mise en correspondance avec la surface d'arc convexe ; et la surface d'arc convexe est partiellement située dans la surface d'arc concave.

6. Mécanisme de conversion de poussée (100) selon la revendication 5, dans lequel la pièce préchargée élastique est un ressort préchargé (104) présentant une extrémité fixée dans le trou ouvert, et l'autre extrémité fixée et manchonnée sur une extrémité de la broche de positionnement (103) distale par rapport à l'extrémité de positionnement.

7. Dispositif de déverrouillage pour un ensemble de roues à écartement variable, comprenant :
le mécanisme de conversion de poussée (100) pour un ensemble de roues à écartement variable selon l'une quelconque des revendications 1 à 6 ; et une tige de poussée (90) mise en butée avec un arbre de levage (102) du mécanisme de conversion de poussée (100) et étant poussée par l'arbre de levage (102) pour un déplacement de déverrouillage.

8. Ensemble de roues à écartement variable, comprenant : un essieu (10), une paire de roues (30) et une paire de corps de boîte d'essieu (50), dans lequel la paire de roues (30) est montée sur l'essieu (10), et la paire de corps de boîte d'essieu (50) est montée sur l'essieu (10) et située des deux côtés de la paire de roues (30) ; comprenant en outre :
le dispositif de déverrouillage pour un ensemble de roues à écartement variable selon la revendication 7, la base de montage (101) étant montée au niveau d'une extrémité extérieure d'un corps de boîte d'essieu (50) à proximité de la tige de poussée (90) ;
dans lequel l'essieu (10) est pourvu d'un trou traversant central (15) à travers lequel pénètre la tige de poussée (90), et la tige de poussée (90) présente une extrémité mise en butée avec l'arbre de levage (102) et l'autre extrémité reliée à un mécanisme de liaison ; et lorsqu'une poussée est appliquée sur la tige de poussée (90) par l'arbre de levage (102), la tige de poussée (90) entraîne le mécanisme de liaison pour déverrouiller les roues (30).

9. Ensemble de roues à écartement variable selon la revendication 8, comprenant en outre :
une paire de manchons d'essieu (20), où une circonférence extérieure d'une première extrémité de chaque manchon d'essieu (20) est pourvue d'une base de montage de roue (24), une circonférence extérieure d'une seconde extrémité de chaque manchon d'arbre est pourvue d'une section d'une cannelure externe s'étendant le long d'une direction axiale du manchon d'essieu (20), une périphérie intérieure de la seconde extrémité de chaque manchon d'essieu (20) est pourvue d'une section d'un premier filet non autobloquant (21), une paire des premiers filets non autobloquants (21) présente des directions de filet opposées, et la paire de roues (30) est fixée sur les bases de montage de roue (24) de la paire de manchons d'essieu (20) ;
l'essieu (10) est pourvu de deux sections de seconds filets non autobloquants (14) formant chacune une paire de filets non autobloquants avec le premier filet non autobloquant (21) à des intervalles ; les roues (30) sont montées sur l'essieu (10) à travers les manchons d'essieu (20), et chaque premier filet non autobloquant (21) est relié à chaque second filet non autobloquant (14) d'une manière en correspondance.

10. Ensemble de roues à écartement variable selon la revendication 9, dans lequel
une circonférence externe de l'essieu (10) à proximité de la partie médiane de celui-ci est pourvue d'une section de cannelure externe s'étendant dans une direction axiale de l'essieu (10), et la cannelure externe (11) de l'essieu (10) est pourvue d'un trou oblong (12) s'étendant radialement à travers la cannelure externe et présentant une direction longitudinale coïncidant avec la direction axiale de l'essieu (10) ; et
au moins un premier chemin de roulement (13) disposé circonférentiellement autour de l'essieu (10) est prévu entre l'un des seconds filets non-autobloquants (14) et la cannelure externe (11) de l'essieu (10) ;
l'ensemble de roues à écartement variable comprend en outre un manchon extérieur (40), où le manchon extérieur (40) est manchonné à l'extérieur de l'essieu (10), une circonférence interne du manchon extérieur (40) est pourvue d'un second chemin de roulement (41) correspondant au premier chemin de roulement (13), le second chemin de roulement (41) est pourvu d'un trou de montage d'élément de roulement et en encliquetage avec le premier chemin de roulement (13) pour former un espace de roulement dans lequel un élément de roulement mis en correspondance avec celui-ci est monté à travers le trou de montage d'élément de roulement, de telle sorte que le manchon extérieur (40) est connecté de manière rotative à l'extérieur de l'essieu (10), et une cannelure intérieure mise en correspondance avec la cannelure extérieure sur le manchon d'essieu (20) est prévue sur les deux côtés axiaux du second chemin de roulement (41) à l'intérieur du manchon extérieur (40) et située à une distance prédéterminée du second chemin de roulement (41).

11. Ensemble de roues à écartement variable selon la revendication 10, dans lequel le mécanisme de liaison comprend une bague collectrice de verrouillage (60), une broche de poussée (80) et une pièce élastique de verrouillage ;
la bague collectrice de verrouillage (60) est manchonnée de manière coulissante au niveau de la cannelure extérieure (11) de l'essieu (10), et la bague collectrice de verrouillage (60) est pourvue en son sein d'une cannelure intérieure mise en correspondance avec la cannelure extérieure (11) de l'essieu (10), et pourvue extérieurement d'une cannelure extérieure mise en correspondance avec la cannelure intérieure du manchon extérieur (40) ; une paroi intérieure de la bague collectrice de verrouillage (60) est pourvue radialement d'une paire de rainures ouvertes présentant des ouvertures mises en communication avec une extrémité de la bague collectrice de verrouillage (60) ; la broche de poussée (80) passe à travers le trou oblong (12), et les deux extrémités de la broche de poussée (80) font saillie à partir du trou oblong (12), et les deux extrémités de la broche de poussée (80) faisant saillie à partir du trou oblong (12) sont encastrées à l'intérieur de la paire des rainures ouvertes par l'ouverture de la rainure ouverte ; la pièce élastique de verrouillage est manchonnée sur l'essieu (10), présentant une extrémité mise en butée contre une paroi extérieure du premier chemin de roulement (13), et l'autre extrémité mise en butée contre une extrémité de la bague collectrice de verrouillage (60) éloignée de la rainure ouverte ; et lorsque la pièce élastique de verrouillage est dans un état naturel, la cannelure extérieure à l'extérieur de la bague collectrice de verrouillage (60) est au moins partiellement située dans la cannelure intérieure d'un côté correspondant du manchon extérieur (40) pour verrouiller la rotation du manchon extérieur (40) ;
la tige de poussée (90) présente une extrémité pénétrant à travers le trou traversant central (15) de l'essieu (10) et mise en butée contre un côté de la broche de poussée (80) sur lequel le trou ouvert est situé, et l'autre extrémité étant mise en butée contre l'arbre de levage (102) ; et
une bague de support d'arbre de levage (107) est fixée au niveau d'une extrémité de l'essieu (10) et est disposée coaxialement par rapport au trou traversant central (15), une partie de la bague de support d'arbre de levage (107) s'étendant dans le trou traversant central (15), la bague de support d'arbre de levage (107) présente un diamètre intérieur mis en correspondance avec un diamètre extérieur de l'arbre de levage (102) ; et l'arbre de levage (102) entre dans le trou traversant central (15) à travers la bague de support d'arbre de levage (107) et pousse la tige de poussée (90).

12. Ensemble de roues à écartement variable selon la revendication 11, dans lequel
le premier filet non-autobloquant (21) présente une longueur supérieure à la longueur du second filet non-autobloquant (14) et égale à la moitié de l'écartement à changer ;
une circonférence interne du manchon extérieur (40) est pourvue d'un bossage annulaire au niveau du second chemin de roulement (41), et après que le manchon extérieur (40) a été relié à l'essieu (10), une paire d'espaces de montage pour les manchons d'essieu (20) est formée entre le manchon extérieur (40) et l'essieu (10) au niveau des deux côtés axiaux de l'espace de roulement ; et
la pièce élastique de verrouillage est un ressort de verrouillage (70).
